# EUROPÄISCHE PATENTSCHRIFT

(11) **EP 1 331 129 B1**
(45) Veröffentlichungstag und Bekanntmachung des Hinweises auf die Patenterteilung: **31.05.2006**
(21) Anmeldenummer: 02022006.7
(22) Anmeldetag: 01.10.2002
(51) Int. Cl.: B60L 5/28, B60L 5/16

(54) **Anordnung zur Relativverlagerung eines Stromabnehmers gegenüber einem Fahrdraht**
System for displacement of a current collector relative to the contact wire
Système pour le déplacement d'un collecteur de courant relatif au fil de contact

(30) Priorität: 25.01.2002 DE 10202804
(43) Veröffentlichungstag der Anmeldung: 30.07.2003
(73) Patentinhaber: Stemmann-Technik GmbH, 48465 Schüttorf (DE)
(72) Erfinder: Wilpsbäumer, Ulrich, Dipl.-Ing., 48356 Nordwalde (DE)
(74) Vertreter: Griepenstroh, Jörg

(56) Entgegenhaltungen:
- EP-A- 0 030 906
- EP-A- 0 989 015
- DE-A- 19 529 070

## Beschreibung

Die Erfindung betrifft eine Anordnung zur Relativverlagerung eines Bestandteil eines auf Schienen geführten Transportfahrzeugs bildenden Stromabnehmers gegenüber einem Fahrdraht gemäß den Merkmalen im Oberbegriff des Patentanspruchs 1.

Ein Stromabnehmer für ein im Nahverkehr eingesetztes Transportfahrzeug (wie z.B. Straßenbahn) wird in aller Regel durch mechanische Federn an einen Fahrdraht gedrückt. Hierbei kann der Stromabnehmer im Verlaufe der Fahrstrecke unterschiedliche Hubpositionen zwischen seiner Lagerung auf dem Dach des Transportfahrzeugs und dem Fahrdraht wahrnehmen.

Das Absenken des Stromabnehmers vom Fahrdraht erfolgt bei einem Transportfahrzeug im Nahverkehr durch einen elektrischen Antrieb. Dies kann ein Kompaktantrieb oder auch ein Linearantrieb mit einer Spindel sein.

Des Weiteren zählt es zum Stand der Technik, einem Stromabnehmer eine Schnellabsenkung zuzuordnen, um bei Störungen diverser Art Schäden an dem Stromabnehmer und/oder an einem Fahrdraht zu vermeiden.

Unabhängig von der konstruktiven Gestaltung einer solchen Schnellabsenkung haftet ihr der Mangel an, dass eine sofortige Wiederaktivierung des Stromabnehmers nach einer Fehlabsenkung nicht möglich ist. Das entsprechende Transportfahrzeug muss vielmehr, gegebenenfalls mit weiteren Wagen, abgeschleppt werden. Dazu ist es häufig erforderlich, dass Passagiere vorab das Transportfahrzeug verlassen müssen. Dies kann auf freier Fahrstrecke unter sehr ungünstigen Bedingungen erfolgen. Besonders ältere und/oder behinderte Menschen könnten hierbei mit erheblichen Problemen konfrontiert werden.

Die EP 0 030 906 A1 offenbart einen Stromabnehmer, der über Federkraft an den Fahrdraht gedrückt wird. Zur Absenkung des Stromabnehmers ist eine Kolben-Zylinder-Einheit vorgesehen, die auch zur schnellen Absenkung des Stromabnehmers benützt werden kann. Bei einem plötzlichen Druckabfall ist eine Schnellabsenkung und damit eine Entkopplung vom Fahrdraht nicht möglich. Die DE 195 29 070 A beschreibt einen Stromabnehmer mit einem Schleifkontakt für die Übertragung elektrischer Energie von einer Oberleitung zu einem elektrisch angetriebenen Fahrzeug. Um schädliche Einwirkungen auf den Schleifkontakt zu verhindern, ist der Stromabnehmer mit wenigstens zwei in der Höhe verstellbaren Bauelementen ausgerüstet, wobei wenigstens ein federndes Bauelement und wenigstens ein Bauelement mit einer regelbaren Höhenverstellung vorgesehen ist.

Der Erfindung liegt - ausgehend vom Stand der Technik - die Aufgabe zugrunde, eine Anordnung zur Relativverlagerung eines Stromabnehmers gegenüber einem Fahrdraht zu schaffen, die nicht nur im Bedarfsfall eine einwandfreie Schnellabsenkung gewährleistet, sondern bei einer Fehlabsenkung auch eine umgehende Wiederaktivierung eines Stromabnehmers ermöglicht.

Die Lösung dieser Aufgabe besteht nach der Erfindung in den im kennzeichnenden Teil des Patentanspruchs 1 angegebenen Merkmalen.

Die in das Betätigungsglied zwischen dem elektrischen Antrieb und der Schwenkwelle des Stromabnehmers integrierte Schnellsenkeinheit mit vorgespanntem Kraftspeicher kann durch mechanische, elektrische, hydraulische oder pneumatische Energie aktiviert werden. Der Kraftspeicher ist mit einem den Stromabnehmer, insbesondere im Bereich einer Wippe, zugeordneten Sensor gekoppelt. Wird über den Sensor im Bereich der Wippe eine Unregelmäßigkeit festgestellt, erfolgt ohne relevante Zeitverzögerung eine Aktivierung der Schnellsenkeinheit mit einer augenblicklichen Trennung des Stromabnehmers vom Fahrdraht. Hierbei wird nicht nur die Kraft überwunden, mit welcher die Hubfedern den Stromabnehmer an den Fahrdraht drücken, sondern es kann gleichzeitig auch der elektrische Antrieb zumindest zeitweise, jedenfalls für den ersten Moment des Absenkens still gesetzt werden. Der elektrische Antrieb kann nach dem Trennen des Stromabnehmers vom Fahrdraht nach einer vorbestimmten Zeitspanne wieder zugeschaltet werden und dann mit der Schnellsenkeinheit das Absenken des Stromabnehmers übernehmen oder er kann für die gesamte Zeit der Schnellabsenkung inaktiviert bleiben.

Die Schnellsenkeinheit sorgt ferner dafür, dass ein Freilauf zwischen dem elektrischen Antrieb und der Schwenkwelle des Stromabnehmers zur Verminderung der Reibungswiderstände überbrückt wird und ein Lösen des Stromabnehmers vom Fahrdraht ohne Zeitverzögerung erfolgt.

Stellt sich nach dem Absenken des Stromabnehmers heraus, dass der Absenkvorgang auf einer falschen Information beruht, kann durch eine Verstarrung der in das Betätigungsglied integrierten Schnellsenkeinheit dafür gesorgt werden, dass mit Hilfe des elektrischen Antriebs, gegebenenfalls unterstützt durch die Hubfedern, der Stromabnehmer wieder gegen den Fahrdraht gedrückt wird, so dass dann das betreffende Transportfahrzeug zumindest in Langsamfahrt selbstständig weiter bewegt werden kann.

Der der Schnellsenkeinheit zugeordnete Kraftspeicher ist bevorzugt so ausgelegt, dass er ohne großen Aufwand wieder reaktiviert werden kann.

Eine besonders vorteilhafte Ausführungsform der Erfindung wird in den Merkmalen des Patentanspruchs 2 erblickt. Danach umfasst die Schnellsenkeinheit ein mit einem pneumatischen Druckbehälter verbundenes, pneumatisch beaufschlagbares Kolben-Zylinder-Aggregat. Der pneumatische Druckbehälter kann insbesondere durch eine handelsübliche CO₂-Flasche gebildet sein, die ein problemloses Auswechseln nach der Auslösung der Schnellabsenkung erlaubt (Druckgaspatrone).

Gemäß der Erfindung ist es ferner zweckmäßig, wenn nach Patentanspruch 3 der Zylinder des Kolben-Zylinder-Aggregats mit einer Spindel eines elektrischen Linearantriebs und die Kolbenstange über einen Y-artig konfigurierten Kipphebel mit der Schwenkwelle des Stromabnehmers verbunden sind.

Im Normalfall übernimmt der Kipphebel die Entkopplung des elektrischen Antriebs von der Schwenkwelle im Bereich des jeweils gewünschten Freilaufs. Dadurch können aus dem elektrischen Antrieb keine erhöhten Reibungswiderstände den Bewegungsablauf des Stromabnehmers beeinflussen.

Die Merkmale des Patentanspruchs 4 gewährleisten, dass das in den Kolbenraum des Zylinders des Kolben-Zylinder-Aggregats eingeströmte Druckgas über die Drosselöffnung ungehindert in die Umgebung abströmen kann. Die in den Kolbenstangenraum eingegliederte Rückstellfeder sorgt dann dafür, dass das Kolben-Zylinder-Aggregat in sich verstarrt wird und damit ein unmittelbarer Einfluss vom elektrischen Antrieb auf die Schwenkwelle des Stromabnehmers ausgeübt werden kann.

Um die Bewegungsabläufe nach einer Auslösung der Schnellabsenkung einwandfrei zu koordinieren, sehen die Merkmale des Patentanspruchs 5 vor, dass zwischen den Sensor und den Kraftspeicher einerseits sowie den elektrischen Antrieb andererseits eine insbesondere speicherprogrammierbare Steuerung eingegliedert ist.

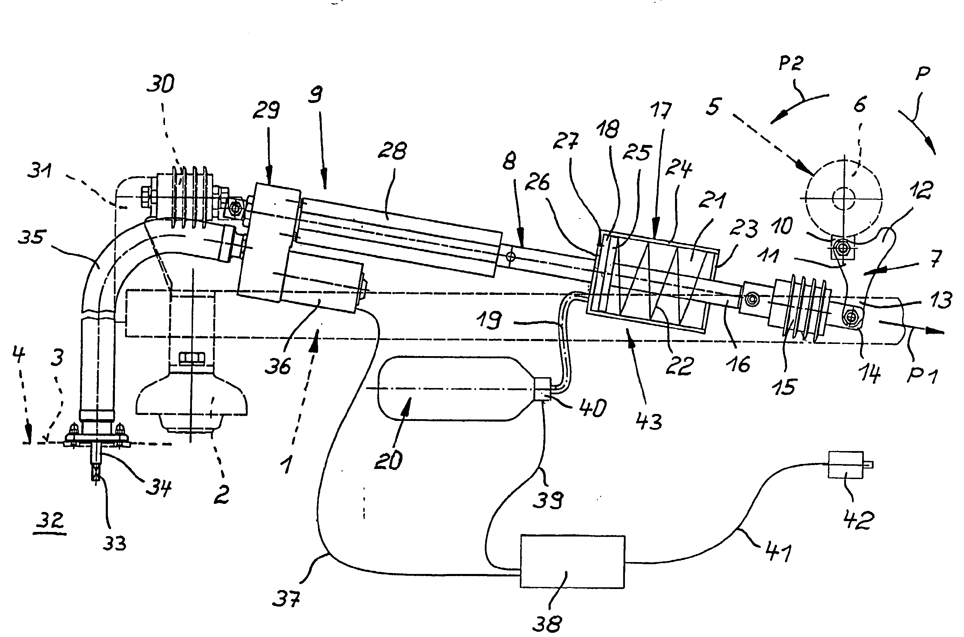

Die Erfindung ist nachfolgend anhand eines in der Zeichnung dargestellten Ausführungsbeispiels näher erläutert.

Mit 1 ist ein Abschnitt eines Rahmens bezeichnet, der über mehrere Isolatoren 2 auf dem Dach 3 eines ansonsten nicht näher dargestellten Transportfahrzeugs 4 für den Nahverkehr (Straßenbahn) befestigt ist.

Der Rahmen 1 dient der Lagerung eines Stromabnehmers 5, von dem lediglich eine Schwenkwelle 6 angedeutet ist.

Die Schwenkwelle 6 ist über einen Y-artig konfigurierten Kipphebel 7 mit einem Betätigungsglied 8 eines elektrischen Antriebs 9 in Form eines Linearantriebs schwenkbeweglich verbunden. Dazu weist die Schwenkwelle 6 einen radialen Fortsatz 10 auf, der mit einem Schenkel 11 des Kipphebels 7 drehbeweglich verbunden ist. Ein zweiter Schenkel 12 des Kipphebels 7, der endseitig gerundet ist, kann in nachstehend noch näher erläuterter Weise an der Schwenkwelle 6 zur Anlage gelangen. Der dritte Schenkel 13 des Kipphebels 7 ist drehbeweglich mit dem freien Ende 14 des Betätigungsglieds 8 verbunden.

Benachbart zu der Verbindung zwischen dem dritten Schenkel 13 des Kipphebels 7 und dem freien Ende 14 des Betätigungsglieds 8 ist in das Betätigungsglied 8 ein Isolator 15 eingebaut. Der Isolator 15 ist mit der Kolbenstange 16 eines Kolben-Zylinder-Aggregats 17 als integrierter Bestandteil des Betätigungsglieds 8 lösbar verbunden.

Der Kolbenraum 18 des Kolben-Zylinder-Aggregats 17 ist über eine Leitung 19 an einen pneumatischen Druckbehälter 20 in Form einer CO₂-Druckgaspatrone angeschlossen. In den Kolbenstangenraum 21 ist eine Rückstellfeder 22 in Form einer Schraubendruckfeder eingegliedert, die sich einerseits an dem von der Kolbenstange 16 relativbeweglich durchsetzten Deckel 23 des Zylinders 24 des Kolben-Zylinder-Aggregats 17 und andererseits an dem Kolben 25 abstützt. Ferner ist zu erkennen, dass in dem Deckel 26 des Zylinders 24 eine Drosselöffnung 27 vorgesehen ist.

Das Betätigungsglied 8 ist mit einer Spindel 28 des elektrischen Antriebs 9 verbunden. Das Gehäuse 29 des elektrischen Antriebs 9 ist an einem Isolator 30 abgestützt, der seinerseits über eine Konsole 31 an dem Rahmen 1 festgelegt ist.

Zwischen dem im Gehäuse 29 befindlichen, nicht näher dargestellten Getriebe des elektrischen Antriebs 9 und einem im Fahrzeuginnern 32 befindlichen, von Hand betätigbaren Zapfen 33 erstreckt sich eine biegsame Welle 34. Mittels dieser biegsamen Welle 34 kann die Spindel 28 bei ausgeschaltetem elektrischen Antrieb 9 manuell betätigt werden. Die biegsame Welle 34 ist in einen Mantel 35 geschützt eingebettet.

Der Motor 36 des elektrischen Antriebs 9 steht über eine Leitung 37 mit einer speicherprogrammierbaren Steuerung 38 in Verbindung. Diese Steuerung 38 steht ferner über eine Leitung 39 mit einem nicht näher veranschaulichten Auslösemechanismus 40 des Druckbehälters 20 in Verbindung. Andererseits ist die Steuerung 38 über eine Leitung 41 an einen Sensor 42 angeschlossen. Der Sensor 42 ist der nicht näher veranschaulichten Wippe des Stromabnehmers 5 zugeordnet.

Im Betrieb des Stromabnehmers 5 wird dieser durch nicht näher veranschaulichte mechanische Hubfedern gegen den ebenfalls nicht näher veranschaulichten Fahrdraht gedrückt.

Um die Bewegungen des Stromabnehmers 5 in den verschiedenen Relativpositionen zwischen dem Rahmen 1 und dem Fahrdraht entlang der Fahrstrecke des Transportfahrzeugs 4 möglichst reibungsfrei zu gewährleisten, ist der Kipphebel 7 zwischen die Schwenkwelle 6 und das Betätigungsglied 8 des elektrischen Antriebs 9 eingegliedert. Es ist zu erkennen, dass bei einer Drehung der Schwenkwelle 6 in Richtung des Pfeils P der Kipphebel 7 um die Verbindung mit dem freien Ende 14 das Betätigungsglied 8 schwenken kann und der zweite Schenkel 12 keinen Kontakt mit der Schwenkwelle 6 hat. Bei Aktivierung des elektrischen Antriebs 9 in Richtung des Pfeils P1 kommt jedoch nach Überwindung des Freilaufs der zweite Schenkel 12 am Umfang der Schwenkwelle 6 zur Anlage, so dass dann die Schwenkwelle 6 gegen die Kraft der nicht näher dargestellten Hubfedern in Richtung des Pfeils P2 gedreht werden kann.

Wird über den Sensor 42 eine Unregelmäßigkeit im Bereich der Anlage der Wippe am Fahrdraht festgestellt, so löst der Sensor 42 über die speicherprogrammierbare Steuerung 38 einen Impuls am Auslösemechanismus 40 des Druckbehälters 20 aus, wodurch dieser geöffnet wird und Druckgas schlagartig aus dem Druckbehälter 20 über die Leitung 19 in den Kolbenraum 18 des Kolben-Zylinder-Aggregats 17 strömt. Durch diesen plötzlichen Druck werden der Kolben 25 und die Kolbenstange 16 in Richtung des Pfeils P1 verlagert, so dass der zweite Schenkel 12 des Kipphebels 7 an der Schwenkwelle 6 zur Anlage gelangt und diese in Richtung des Pfeils P2 innerhalb eines kurzen Zeitraums gedreht wird, so dass eine schnelle Trennung des Stromabnehmers 5 vom Fahrdraht bewirkt wird. Gleichzeitig kann über die Steuerung 38 der Motor 36 des elektrischen Antriebs 9 aktiviert werden, so dass die Spindel 28 der Bewegung der Kolbenstange 16 nachfolgen kann. Diese Bewegung kann gleichzeitig mit der Beaufschlagung des Kolbenraums 18 des Kolben-Zylinder-Aggregats 17 erfolgen oder auch hierzu zeitverzögert.

Mit dem plötzlichen Druckstoß wird - wie gesagt - der Kolben 25 gegen die Kraft der Rückstellfeder 22 verlagert. Gleichzeitig kann über die Drosselöffnung 27 Druckgas in die Umgebung abströmen, so dass nach der Schnellabsenkung die Schnellsenkeinheit 43 durch die Rückstellfeder 22 im Verlauf des Betätigungsglieds 8 verstarrt wird und dann nur noch der elektrische Antrieb 9 entweder die weitere Absenkung des Stromabnehmers 5 oder dessen Position in der abgesenkten Lage gewährleistet.

Der Druckbehälter 20 ist in nicht näher dargestellter Weise auswechselbar am Rahmen 1 gelagert.

### Bezugszeichenaufstellung

- 1 -: Rahmen
- 2 -: Isolatoren
- 3 -: Dach v. 4
- 4 -: Transportfahrzeug
- 5 -: Stromabnehmer v. 4
- 6 -: Schwenkwelle v. 5
- 7 -: Kipphebel
- 8 -: Betätigungsglied v. 9
- 9 -: elektrischer Antrieb
- 10 -: Fortsatz an 6
- 11 -: Schenkel v. 7
- 12 -: Schenkel v. 7
- 13 -: Schenkel v. 7
- 14 -: freies Ende v. 8
- 15 -: Isolator
- 16 -: Kolbenstange v. 17
- 17 -: Kolben-Zylinder-Aggregat
- 18 -: Kolbenraum v. 17
- 19 -: Leitung zw. 18 u. 20
- 20 -: Druckbehälter
- 21 -: Kolbenstangenraum v. 17
- 22 -: Rückstellfeder in 21
- 23 -: Deckel v. 24
- 24 -: Zylinder v. 17
- 25 -: Kolben v. 17
- 26 -: Deckel v. 24
- 27 -: Drosselöffnung in 26
- 28 -: Spindel v. 9
- 29 -: Gehäuse v. 9
- 30 -: Isolator
- 31 -: Konsole
- 32 -: Fahrzeuginneres
- 33 -: Zapfen an 34
- 34 -: biegsame Welle
- 35 -: Mantel f. 34
- 36 -: Motor v. 9
- 37 -: Leitung zw. 36 u. 38
- 38 -: speicherprogrammierbare Steuerung
- 39 -: Leitung zw. 38 u. 40
- 40 -: Auslösemechanismus v. 20
- 41 -: Leitung zw. 38 u. 42
- 42 -: Sensor
- 43 -: Schnellsenkeinheit

- P -: Pfeil
- P1 -: Pfeil
- P2 -: Pfeil

## Patentansprüche

1. Anordnung zur Relatiwerlagerung eines Bestandteil eines auf Schienen geführten Transportfahrzeug (4) bildenden Stromabnehmers (5) gegenüber einem Fahrdraht, welche einen elektrischen Antrieb (9) aufweist, der über ein Betätigungsglied (8) mit einer Schwenkwelle (6) des durch Federkraft an den Fahrdraht gedrückten Stromabnehmers (5) gekoppelt ist, **dadurch gekennzeichnet, dass** in das Betätigungsglied (8) eine mit einem vorgespannten Kraftspeicher (20) ausgerüstete Schnellsenkeinheit (43) integriert ist, wobei der Kraftspeicher (20) und der elektrische Antrieb (9) mit einem dem Stromabnehmer (5) zugeordneten Sensor (42) gekoppelt sind.

2. Anordnung nach Patentanspruch 1, **dadurch gekennzeichnet, dass** die Schnellsenkeinheit (43) ein mit einem pneumatischen Druckbehälter (20) verbundenes pneumatisch beaufschlagbares Kolben-Zylinder-Aggregat (17) umfasst.

3. Anordnung nach Patentanspruch 1 oder 2, **dadurch gekennzeichnet, dass** der Zylinder (24) des Kolben-Zylinder-Aggregats (17) mit einer Spindel (28) eines elektrischen Linearantriebs (9) und die Kolbenstange (16) über einen Y-artig konfigurierten Kipphebel (7) mit der Schwenkwelle (6) des Stromabnehmers (5) verbunden sind.

4. Anordnung nach Patentanspruch 3, **dadurch gekennzeichnet, dass** der mit dem Druckbehälter (20) verbundene Kolbenraum (18) des Zylinders (24) über eine Drosselöffnung (27) an die Umgebung angeschlossen ist und in den Kolbenstangenraum (21) eine Rückstellfeder (22) eingegliedert ist.

5. Anordnung nach einem der Patentansprüche 1 bis 4, **dadurch gekennzeichnet, dass** zwischen den Sensor (42) und den Kraftspeicher (20) einerseits sowie den elektrischen Antrieb (9) andererseits eine insbesondere speicherprogrammierbare Steuerung (38) eingegliedert ist.

## Claims

1. Arrangement for displacing a current collector (5) forming a component of a transport vehicle (4) which is guided on rails, relative to a contact wire, which arrangement has an electric drive (9) which is coupled via an activation element (8) to a pivot shaft (6) of the current collector (5) which is forced against the contact wire by spring force, **characterized in that** a high-speed lowering unit (43) which is equipped with a prestressed force accumulator (20) is integrated into the activation element (8), the force accumulator (20) and the electric drive (9) being coupled to a sensor (42) which is assigned to the current collector (5).

2. Arrangement according to Patent Claim 1, **characterized in that** the high-speed lowering unit (43) comprises a piston-cylinder assembly (17) which is connected to a pneumatic pressure vessel (20) and can be acted on pneumatically.

3. Arrangement according to Patent Claims 1 or 2, **characterized in that** the cylinder (24) of the piston-cylinder assembly (17) is connected to a spindle (28) of an electric linear drive (9), and the piston rod (16) is connected to the pivot shaft (6) of the current collector (5) via a toggle lever (7) which is configured in the manner of a Y.

4. Arrangement according to Patent Claim 3, **characterized in that** the piston space (18), connected to the pressure vessel (20), of the cylinder (24) is connected to the surroundings via a throttle opening (27), and a restoring spring (22) is integrated into the piston rod space (21).

5. Arrangement according to one of Patent Claims 1 to 4, **characterized in that** a controller (38), in particular a stored-program controller (38) is integrated between the sensor (42) and the force accumulator (20) on the one hand, and the electric drive (9) on the other.

## Revendications

1. Dispositif pour le déplacement relatif d'un collecteur de courant (5) constituant un composant pour un véhicule de transport (4) guidé sur rail, par rapport à un fil de contact, dispositif qui présente une motorisation électrique (9) et qui est accouplée par l'intermédiaire d'un élément d'actionnement (8) à un arbre pivotant du collecteur de courant (5) comprimé sur le fil de contact sous l'effet de la force de ressort, **caractérisé en ce qu'**une unité de descente rapide (43) est intégrée dans l'élément d'actionnement (8) avec un collecteur de force précontraint (20), le collecteur de force (20) et la motorisation électrique (9) étant accouplés à un capteur (42) affecté au collecteur de courant (5).

2. Dispositif selon la revendication 1, **caractérisé en ce que** l'unité de descente rapide (43) comprend un ensemble piston - cylindre (17) pouvant être alimenté pneumatiquement et raccordé à un réservoir de pression pneumatique (20).

3. Dispositif selon la revendication 2, **caractérisé en ce que** le cylindre (24) de l'ensemble piston - cylindre (17) avec une broche (28) d'une commande électrique linéaire (9) et la tige (16) du piston de l'ensemble piston-cylindre (17) sont raccordés par l'intermédiaire d'un levier basculant (7) configuré en forme de Y avec l'arbre basculant (6) du collecteur de courant (5).

4. Dispositif selon la revendication 3, **caractérisé en ce que** la chambre de piston (18), raccordée au réservoir de pression (20) du cylindre (24), est en communication avec l'environnement par l'intermédiaire d'une ouverture à étranglement (27), et un ressort de rappel (22) est disposé dans l'espace tige-piston (21).

5. Dispositif selon l'une des revendications 1 à 4, **caractérisé en ce qu'**une commande, en particulier une commande à mémoire programmable (38), est disposée entre le capteur (42) et d'une part le collecteur de force (20), ainsi que d'autre part la motorisation électrique (9).
